# EUROPEAN PATENT SPECIFICATION

(11) **EP 2 896 225 B1**
(45) Date of publication and mention of the grant of the patent: **18.12.2019**
(21) Application number: 12758472.0
(22) Date of filing: 12.09.2012
(51) Int. Cl.: H04W 4/18, H04W 4/02

(54) **METHOD AND APPARATUSES FOR ANNOTATING AN ELECTRONIC MAP RELATING TO LOCATION OF A MOBILE DEVICE**
VERFAHREN UND VORRICHTUNGEN ZUM HINZUGÜGEN VON KOMMENTAREN AUF EINER ELEKTRONISCHEN KARTE BEZÜGLICH DER POSITION EINES MOBILEN GERÄTES
PROCÉDÉ ET APPAREILS POUR L'ANNOTATION D'UNE CARTE ÉLECTRONIQUE EN RAPPORT AVEC LA LOCALISATION D'UN DISPOSITIF MOBILE

(43) Date of publication of application: 22.07.2015
(73) Proprietor: Telefonaktiebolaget LM Ericsson (publ), 164 83 Stockholm (SE)
(72) Inventor: NIEMOELLER, Joerg, S-17241 Sundbyberg (SE); AVESAND, Stefan, S-141 39 Huddinge (SE); MOKRUSHIN, Leonid, S-75437 Uppsala (SE); PECO, Farjola, S-169 74 Solna (SE)
(74) Representative: Brann AB
(86) International application number: PCT/EP2012/067765
(87) International publication number: WO 2014/040616

(56) References cited:
- WO-A2-2011/162583
- US-A1- 2011 080 848
- US-A1- 2011 081 919
- US-A1- 2012 029 817

## Description

### TECHNICAL FIELD

The invention relates to the field of electronic maps, and in particular to annotating an electronic map.

### BACKGROUND

Maps of outdoor public spaces are widely available. Various printed and online services allow access to many different kinds of map, some providing photographs of an area, some providing information relating to goods and services available at various locations. However, maps of private locations, particularly indoor locations, are not readily available. In other circumstances, a map may be available but is out of date. For example, a map of a large office block might b based on the original schematics and layout of the office block. However, as the use of the office block changes, the internal layout such as the position of offices and the use of particular locations may change. It is costly and time consuming to update a static map each time a change is made to the internal structure of a building.

In order to provide a service that provides indoor navigation that provides the ability to guide users through a building, the map must be up to date. US 2012/0029817 describes a method of keeping a map up to date using location information obtained from mobile devices. This document describes using a map of the internal structure of a building as a starting point. Users of mobile devices can manually send updates relating to locations on the map. Furthermore, location data obtained from mobile devices can be used to update the map itself. For example, location data may indicate that mobile devices repeatedly move through a region that is indicated to be a wall on the map. In this case, the map is automatically updated to remove the indication that the wall is present.

US 2012/0029817 describes that the map can be annotated with further information (referred to herein as context identifiers). A context identifier is associated with a particular location to describe, for example, its function. Other examples of information that can be included in a context identifier include areas with a particular security clearance, times of availability and so on. A problem with the system described by US 2012/0029817 is that a context identifier is entered manually by a user. For example, a user must inform the map that a particular area is used as a canteen, or is a meeting room. This can lead to errors in the map where users incorrectly enter data, or can lead to areas of the map for which no context identifiers are available because no user has taken the time to update the map. While the physical layout of a map generated by the techniques described in US 2012/0029817 may be sufficiently accurate, the annotations may be out of date. This may lead a room to be marked as a meeting room when it fact it has since changed use and is now a private office.

### SUMMARY

The present invention is defined by the appended independent claims. It is an object of the invention to provide a technique for ensuring that map annotations remain up to date without requiring manual input from a user. According to a first aspect, there is provided a method of annotating an electronic map. A server receives from a mobile device location information relating to a location of the mobile device. It then determines the location of the mobile device relative to the electronic map. Further information relating to the mobile device is automatically obtained. The further information includes at least one of: a time at which the mobile device is at the location, a duration for which the mobile device is at the location, a proximity of at least one further mobile device, data obtained from an application operated by the mobile device, image data, and sound data. The obtained further information is used to determine an annotation relating to the electronic map. The annotation can then be associated with a location on the electronic map. This advantage of this is that annotations are automatically determined without requiring input from a user, which could be inaccurate.

As an option, the method may further include determining from the location information that the electronic map requires updating, and subsequently updating the electronic map. The advantage of this is that changes to a physical layout can be correspondingly made to the electronic map without manual user intervention. As a further option, the determination that the electronic map requires updating includes any of determining that an obstruction is no longer present, determining that a previously inaccessible region is accessible, and determining that a map layout has changed. As a further option, a determination that the electronic map requires updating is obtained from location information obtained from a plurality of mobile devices. An advantage of obtaining information from a plurality of mobile devices is that the updates are more likely to be accurate.

Many different types of further information may be used. Examples include:
a time at which the mobile device is at the location;
a duration for which the mobile device is at the location;
data obtained from an application operated by the mobile device;
image data obtained from the mobile device;
sound data obtained from the mobile device; and
a proximity of at least one further mobile device.

The proximity of further mobile devices is particularly useful, as this can establish whether a user is alone or in company, which can help to determine an annotation.

Where the further information is the data obtained from the application operated by the mobile device, it optionally includes any of diary data, calendar data, meeting request data, and user profile data.

As a further option, the server generates a route between two locations on the electronic map and sends the route to the mobile device.

As an option, the method includes sending the location information associated with a user of the mobile device to a presence server with which the user of the mobile device is registered.

In the event that the obtained further information is inconsistent with older further information relating to the mobile device, the older further information is optionally provided with a lower weighting when determining the annotation relating to the location on the electronic map. The advantage of this is that old data gradually gets replaced by newer data, and so the annotations are more likely to be up to date.

An advantageous option is to obtain further information from the plurality of mobile devices. The location data of other mobile devices not only makes the data more accurate, but can be used to make assumptions about the use or nature of the location of the mobile device.

According to a second aspect, there is provided a server for use in a communication network. The server is provided with a computer readable medium in the form of a memory for storing an electronic map. A receiver is provided for receiving, from a mobile device, location information relating to a location of the mobile device. A processor is provided for determining the location of the mobile device relative to the electronic map. The processor is further arranged to automatically obtain further information relating to the mobile device. The processor is arranged to obtain further information selected from at least one of: a time at which the mobile device is at the location, a duration for which the mobile device is at the location, a proximity of at least one further mobile device, data obtained from an application operated by the mobile device, image data obtained from the mobile device, and sound data obtained from the mobile device. The processor is arranged to determine an annotation relating to the electronic map using the obtained further information, and associate the annotation with a location on the electronic map.

As an option, the processor is further arranged to determine, from the location information, that the electronic map requires updating, and subsequently update the electronic map.

As an option, the receiver is arranged to receive location information from a plurality of mobile devices, and the processor is arranged to determine that the electronic map requires updating using the location information obtained from the plurality of mobile devices.

The processor is optionally arranged to obtain further information selected from any of:
a time at which the mobile device is at the location;
a duration for which the mobile device is at the location;
a proximity of at least one further mobile device;
data obtained from an application operated by the mobile device;
image data obtained from the mobile device; and
sound data obtained from the mobile device.

The processor is optionally further arranged to generate a route between two locations on the electronic map, the server further comprising a transmitter for sending the route to the mobile device.

The server is optionally provided with a second transmitter for sending the location information associated with a user of the mobile device to a presence server with which the user of the mobile device is registered.

The processor is optionally arranged to, in the event that the obtained further information is inconsistent with older further information relating to the mobile device, provide a lower weighting to the older further information when determining the annotation relating to the electronic map.

The receiver is optionally arranged to obtain further information from a plurality of mobile devices. The location data from other mobile devices not only makes the annotation more accurate, but can be used to make assumptions about the use or nature of the location of the mobile device.

According to a third aspect, there is provided a mobile device for use in a communications network. The mobile device is provided with a processor for receiving, from a location application, location information relating to the mobile device. A first transmitter is provided for sending the location information to a server. The processor is arranged to obtain further information from a further application, and a second transmitter is provided for sending the further information to the server, the further information being usable by the server to determine an annotation relating to an electronic map. The further information includes at least one of: a time at which the mobile device is at the location, a duration for which the mobile device is at the location, a proximity of at least one further mobile device, data obtained from an application operated by the mobile device, image data obtained from the mobile device, and sound data obtained from the mobile device.

According to a fourth aspect, there is provided a computer program comprising computer readable code which, when run on a server in a communications network, causes the server to perform the method described above in the first aspect.

According to a fifth aspect, there is provided a computer program, comprising computer readable code which, when run on a mobile device, causes the mobile device to behave as a mobile device as described above in the third aspect.

According to a sixth aspect, there is provided a computer program product comprising a computer readable medium and a computer program as described above in either of the fourth or fifth aspects, wherein the computer program is stored on the computer readable medium.

### BRIEF DESCRIPTION OF DRAWINGS

Figure 1 illustrates schematically in a block diagram an exemplary map of an indoor space;
Figure 2 illustrates schematically in a block diagram a network according to an embodiment of the invention;
Figure 3 is a flow diagram illustrating steps of an exemplary embodiment; and
Figure 4 illustrates schematically in a block diagram an exemplary server.

### DETAILED DESCRIPTION

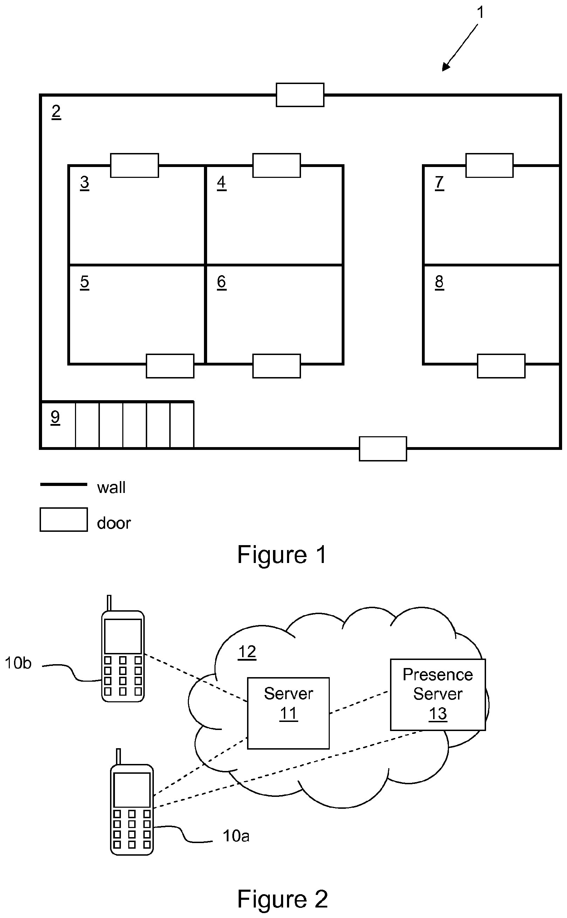

Figure 1 illustrates schematically in a block diagram a map 1 of an indoor space. The map 1 shows corridor area 2, offices 3, 4, 5, 6, a canteen 7, a meeting room 8 and stairs 9 to another floor of the building.

Figure 2 illustrates schematically a simple network. A mobile device 10a connects to a server 11 via a communications network 12. In certain embodiments, the server 11 may also connect to a presence server 13 with which the user of the mobile device 10a is registered. Another mobile device 10b is also shown.

The mobile device 10a provides location information to the server 11. The method for obtaining location information is outside the scope of this description, but examples include GPS data, the location of the nearest Wi-Fi access point and so on.

The server 11 uses the identity of the user of the mobile device 10a and the location information to determine where the user is at a given time. Location information for other users may also be obtained to determine whether the user is alone or in the company of other users. The server 11 can then apply rules to make an assumption about the nature and/or use of the user's location. This assumption can be used to annotate an electronic map. For example, if a group of users are in the same location for a certain period of time, then it may be assumed that the location is a meeting room, whereas if a user remains alone in the same location for a long period of time, then it may be assumed that the location is the user's office.

The assumption may be verified or reinforced by obtaining other information from the user's mobile device 10a, or from a mobile device 10b belonging to another user. For example, an electronic calendar on the mobile device 10a may be queried to ascertain whether it indicates that the user is due to be in a particular meeting room at a certain time. This information can be used to support the assumption about the use and nature of the user's location.

The electronic map is therefore annotated on the fly by observing the movement patterns of the users' mobile devices 10a, 10b without the need for any manual input from the users or a system administrator. Such maps can be used for navigation and so on to guide all users to various points in the location described in the map.

By way of example, assume that office 4 is the office for User A, who uses mobile device 10a, and office 5 is the office for User B who uses mobile device 10b. The server 11 is constantly updated with the location of the mobile devices 10a, 10b, and so is aware of the locations of User A and User B.

By testing statistical patterns on the current and past set of location data of Users A and B, the server 11 distinguishes use categories of areas by different observed usage patterns of a location. The following examples illustrate potential assumptions based on the user's location and movements.
- If mobile device 10a remains for a significant period of the working day in room 4, then the server 11 assumes that room 4 is User A's office, and annotates the map 1 accordingly.
- If mobile device 10a is briefly in area 2 of the map 1, but never remains in that area for long, the server 11 may assume that area 2 is a corridor, and annotates the map accordingly.
- If a location is never crossed by any user, it may be considered to be a wall or other barrier. If no such barrier is shown on the map 1, then the server 11 can update the map 1 accordingly.
- If mobile device 10a and mobile device 10b are both in room 8 at the same time during business hours, the server assumes that room 8 is a meeting room. This assumption may be strengthened by obtaining further data from the mobile devices 10a, 10b, such as the User A and/or User B's calendars. In this case, the time at which a user is at the location is used to determine the likely use of the location.
- If mobile device 10a and mobile device 10b are both in room 7 at the same time around lunch time, the server assumes that room 8 is a canteen or kitchen. This assumption may be strengthened by obtaining further data from the mobile devices 10a, 10b, such as the User A and/or User B's calendars.
- If mobile device 10a visits a room frequently for a short period of time, the server 11 may assume that the location is a rest room, particularly if User A is usually alone when in that location. In this case, both the time at which the user is at the location, and the duration for which the user remains at the location, is used to make an assumption about the use of the location.
- If mobile device 10a always traverses region 9 of the map 1 and subsequently appears on another floor of the map, the server 11 assumes that region 9 of the map includes a staircase or elevator. If the user waits a short period of time before changing floor, then region 9 is more likely to be an elevator. If the user goes straight from one floor to another and does not stop moving, then region 9 is more likely to be a staircase.

By looking at the data from all users the server can update the electronic map 1 and annotate the locations on the electronic map 1.

The server 11 typically uses data from several mobile devices; the more mobile devices are used, the more accurate the annotations are likely to be. For example, if User A is in meeting room 8 at a time when his calendar indicates he should be in meeting room 8, then this location can most likely be considered to be a meeting room. However, this if many users are in this location at the same time, and their calendars also indicate that they should be in meeting room 8, then the assumption that room8 is a meeting room is much more likely to be correct. Over time, many meetings in meeting room 8 can be correlated with that particular name in the calendars of the participants.

In the event that the server 11 receives conflicting information, or insufficient information to make a reasonable assumption about the use or nature of a location, the server 11 may send a request message to the mobile device 10a asking User A to respond with information relating to User A's current location.

It will be appreciated that the map annotations will be more accurate when the server 11 has collected more data; this may be from length of time collecting data, a greater number of users and so on.

The server 11 will automatically determine changes in the layout of the building or re-allocation of rooms when the usage pattern of certain locations changes significantly and consistently. The server 11 continuously recalculates the layout and annotations of the map in order to see if there are changes. Phasing out old assumptions about the layout and use of locations can be done by weighting date data used to make the assumption with its age. In this case, newer data is given a higher weight in the calculation than older data. In the event that, for example, rooms 7 and 8 are converted to offices, the usage patterns of the users will, over time, lead the server 11 to assume that these rooms are now offices, and no longer a canteen and a meeting room.

As mentioned above, the assumptions can be confirmed or at least supported by obtaining further information from the mobile device 10a, and the example of calendar data is given above. However, it will be appreciated that other types of data can be used. The following non-exhaustive list gives some examples of other types of further information that may be used to support an assumption about the use of a location:
- The user's contact details: For example, if a user's contact details indicate that his job title is "Research Scientist", the nit is reasonable to assume that a location frequented by the user may be an office or a laboratory.
- Image data: Image data from the mobile device's 10a camera may be used to determine the nature of a location; for example, the nature and quality of the light may be used to determine whether the user's location is indoor or outdoor. This is an example of finding the nature of a location rather than its use.
- Sound data: Sound data obtained from the mobile device's 10a microphone may be indicative of a certain location. For example, a printer room or a canteen may have a distinctive sound.
- Accelerometer data: Many mobile devices are equipped with an accelerometer. If the accelerometer indicates that mobile device 10a is moving vertically, it can support an assumption that User A is in an elevator.
- Certain other devices, such as printers, may be Bluetooth enabled or can be detected in some other way by the mobile device 10a. The proximity of other devices detectable by the mobile device 10a can assist in supporting an assumption about the nature of a location.
- User settings: User A may set his mobile device 10a to "silent" mode, suggesting that User A may be located in a meeting room or a library. Other user settings may also assist in indicating the nature of the user's location.

The server 11 can also provide automatic checks of other data relating to the user's location. For example, if the user profile of User A is updated to show that they have a new office room number, the server 11 will then consider the earlier information regarding the User A's office to be suspicious. The server 11 can then observe User A's behaviour in order to correlate him with his new location. This might, however, mean that the user's new location is already known under this location name (room number) and the server 11 tries to verify that User A is really using the new location as expected. If User A's behaviour differs from the server's 11 expectation, the server 11 might also raise a warning or ask a question, because the new entry in the user profile night be incorrect. For example the user might, according to his new profile be have his office in room 7, while his behaviour patterns indicate, that he is actually using room 8 as an office.

The annotated map 1 can be used to enable navigation applications. In particular, in large buildings, not all employees know the location of all the meeting rooms or office numbers. The server may provide directly a navigation application to work out a route for mobile device 10a to get to a particular location. Alternatively, the server 11 may provide data to a further server that can perform this function.

In addition to creating and annotating maps, the information can be passed to a further server to give dynamic information about current usage of a location. For example, if several users are observed in a room that is known to be a meeting room, it can be determined that a meeting is currently taking place. This information can be sent to the mobile device 10a of a user in the meeting to automatically mute the mobile device's 10a ringtone for the duration of the meeting if User A enters the location.

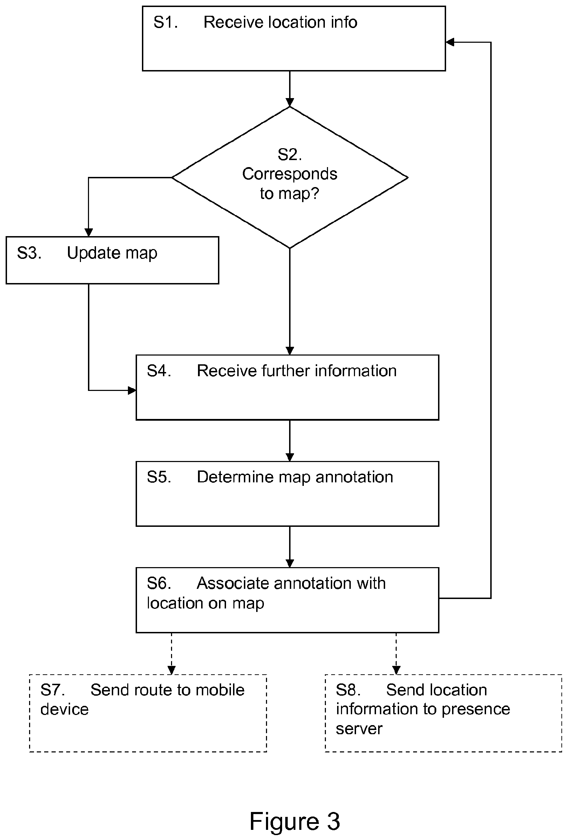

Figure 3 is a flow chart summarizing an embodiment. The following numbering corresponds to that of Figure 3:
S1. The server 11 receives location information from the mobile device 10a.
S2. The server 11 determines that the location of the mobile device 10a corresponds to a viable location on the map 1. If so, proceed to step S4, if not proceed to step S3.
S3. The server 11 updates the map on the basis of the location information, and location information received from other mobile devices.
S4. The server 11 receives further information. This is typically the proximity of further mobile devices in order to build up information about the number of devices at a given location. However, as described above, it may also include time at the location, duration at the location, or data such as calendar, image, sound, mobile device settings data and so on.
S5. The further information is used, along with rules stored at the server 11, to make an assumption about the nature and use of User A's location.
S6. The map 1 is updated with an annotation at User A's location indicating the nature and/or use of the location.
   Steps S1 to S6 are iterative, and the server 11 is continuously updated with location information from all mobile devices registered with the server 11. In this way, the data is refined with time and the map annotations become more accurate.
S7. In an embodiment the server 11 may generate a route map for User A and send it to mobile device 10a to give User A direction to a particular location.
S8. In a further embodiment, the server 11 may send location information to a presence server 13.

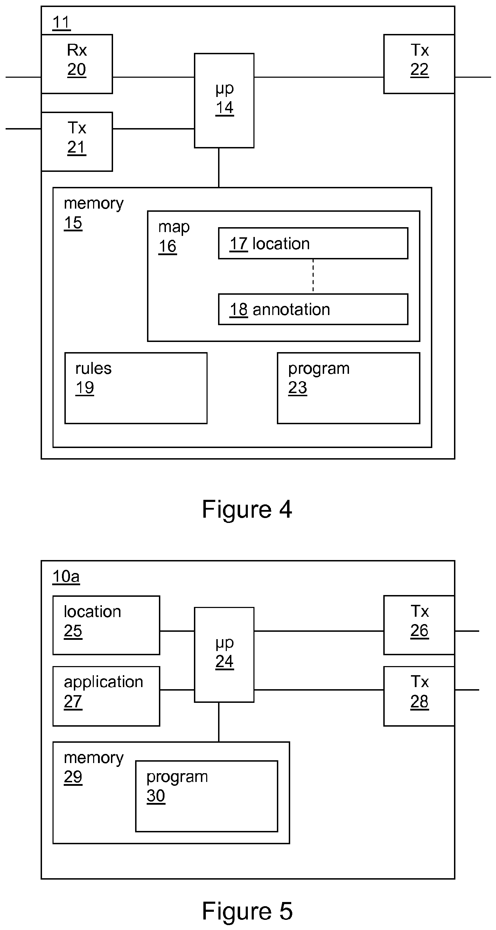

Turning now to Figure 4, there is illustrated schematically in a block diagram an exemplary server 11 as described above. The server 11 is provided with microprocessor 14 and a computer-readable medium in the form of a memory 15. The memory 14 may be used for storing the data required to reproduce an electronic map 16. The data includes location information 17 and associated annotation information 18.

A receiver 20 is provided for receiving location information from the mobile device 10a. The processor 14 then determines the location of the mobile device 10a relative to the electronic map 16. The processor 14 automatically obtains further information relating to the mobile device 10a. This is typically the location of other mobile devices 10b, but as described above may also include data obtained from the mobile device 10a itself. On the basis of the further information, the processor 14 applies rules 19 stored in the memory 15 to the location information and the further information in order to determine an annotation 18 associated with to the location 17 on the electronic map 16.

A first transmitter 21 may be provided for sending a route generated by the processor 14 to the mobile device 10a, or for sending queries to the mobile device 10a. A further transmitter 22 may be provided for sending location information relating to the mobile device 10a to a presence server 13 with which User A is registered.

A computer program 23 may be stored in the memory. When executed by the processor 14, the computer program 23 causes the server 11 to behave as described above.

The above description of the server 11 refers to a single physical memory 15, but it will be appreciated that the physical memory may comprise more than one physical memory, and may be located remotely from the server 11 but be accessible to the server 11. Similarly, the above description of the server 11 refers to receivers and transmitters, but it will be appreciated that these may be physically embodied in different receivers/transmitters, or one or more transceivers.

Turning now to Figure 5, there is illustrated schematically in a block diagram an exemplary mobile device 10a as described above. The mobile device 10a is provided with a processor 24 that receives location information from a location application 24. As described above, any type of location information may be used, such as a Wi-Fi access point or GPS data. A first transmitter 26 is provided for sending the location information to the server 11. The processor 24 is arranged to obtain further information from a further application 27 located at the device, and a second transmitter 28 is provided to send this information to the server 11. This allows the server 11 to determine an annotation for the mobile device's 10a location on the electronic map 16 stored at the server.

A computer readable medium in the form of a memory 29 is also provided. This may be used to store a program 30 which, when executed by the processor 24, causes the mobile device 10a to behave as described above.

The above description of the mobile device 10a refers to a single physical memory 29, but it will be appreciated that the memory 29 may comprise more than one physical memory. Similarly, the above description of the mobile device 10a refers to two transmitters, but it will be appreciated that these may be physically embodied in a single transmitter.

The techniques for map annotation described above ensure that electronic maps remain up to date and are less likely to include errors introduced by a user entering data incorrectly. They also avoid the need for crating maps at high cost as the process is automated. The techniques ensure that changes in the locations (either the physical layout or the uses to which certain locations are put) are quickly identified and the map updated without the need for user intervention, thereby avoiding the need for manual updates to the electronic map.

It will be appreciated by the person of skill in the art that various modifications may be made to the above described embodiment without departing from the scope of the present invention. For example, all of the functions of the server 11 are described as being embodied at a single node, but it will be appreciated that different functions may be provided at different network nodes.

## Claims

1. A method of annotating an electronic map (16), the method comprising:
at a server (11), receiving (S1) from a mobile device (10) location information relating to a location of the mobile device (10); and
determining the location of the mobile device (10) relative to the electronic map (16); the method further comprising:
automatically obtaining (S4) further information relating to the mobile device (10), **characterized in that** the further information includes at least one of: a time at which the mobile device (10) is at the location, a duration for which the mobile device (10) is at the location, a proximity of at least one further mobile device, data obtained from an application operated by the mobile device (10), image data obtained from the mobile device, and sound data obtained from the mobile device,
determining (S5) an annotation (18) indicating an assumed nature and/or use of a user's location relating to the electronic map (16) using the obtained further information along with rules stored at the server (11); and
associating (S6) the annotation (18) with the user's location (17) on the electronic map (16).

2. The method according to claim 1, further comprising:
determining (S2) from the location information that the electronic map (16) requires updating; and
updating (S3) the electronic map (16).

3. The method according to claim 2, wherein the determination (S2) that the electronic map (16) requires updating comprises any of determining that an obstruction is no longer present, determining that a previously inaccessible region is accessible, and determining that a map layout has changed.

4. The method according to claims 2 or 3, further comprising determining that the electronic map (16) requires updating from location information obtained from a plurality of mobile devices.

5. The method according to claim 1, wherein the further information comprises the data obtained from the application operated by the mobile device (10), and wherein the data obtained from the application operated by the mobile device (10) comprises any of diary data, calendar data, meeting request data, and user profile data.

6. The method according to any of claims 1 to 5, further comprising:
at the server (11), generating a route between two locations on the electronic map (16); and
sending (S7) the route to the mobile device (10).

7. The method according to any of claims 1 to 6, further comprising:
sending (S8) the location information associated with a user of the mobile device (10) to a presence server (13) with which the user of the mobile device (10) is registered.

8. The method according to any of claims 1 to 7, further comprising:
in the event that the obtained further information is inconsistent with older further information relating to the mobile device (10), providing a lower weighting to the older further information when determining (S5) the annotation (18) relating to the location (17) on the electronic map (16).

9. The method according to any of claims 1 to 8, further comprising obtaining further information from the plurality of mobile devices.

10. A server (11) for use in a communication network, the server (11) comprising:
a computer readable medium in the form of a memory (15) for storing an electronic map (16);
a receiver (20) for receiving from a mobile device (10) location information relating to a location of the mobile device (10); and
a processor (14) for determining the location of the mobile device (10) relative to the electronic map (16); wherein
the processor (14) arranged to automatically obtain further information relating to the mobile device (10), **characterized in that** the processor is arranged to obtain further information selected from at least one of: a time at which the mobile device (10) is at the location, a duration for which the mobile device (10) is at the location, a proximity of at least one further mobile device, data obtained from an application operated by the mobile device (10), image data obtained from the mobile device (10), and sound data obtained from the mobile device (10);
the processor (14) further arranged to determine an annotation (18) indicating an assumed nature and/or use of a user's location relating to the electronic map (16) using the obtained further information along with rules stored at the server (11); and
the processor (14) being further arranged to associate the annotation (18) with the user's location (17) on the electronic map (16).

11. The server (11) according to claim 10, wherein the processor (14) is further arranged to determine from the location information that the electronic map (16) requires updating, and subsequently update the electronic map (16).

12. The server (11) according to claim 10 or 11, wherein the receiver (20) is arranged to receive location information from a plurality of mobile devices, and the processor (14) is arranged to determine that the electronic map (16) requires updating using the location information obtained from the plurality of mobile devices.

13. A system comprising a server (11) according to claims 10 to 12, and a mobile device (10) for use in a communications network, the mobile device (10) comprising:
a processor (24) for receiving, from a location application (25), location information relating to the mobile device (10);
a first transmitter (26) for sending the location information to the server (11); and
the processor (24) being arranged to obtain further information from a further application (27);
wherein the mobile device (10) further comprising:
a second transmitter (28) for sending the further information to the server (11), the further information being usable by the server (11) to determine the annotation (18) relating to an electronic map (16), **characterized in that** the further information includes at least one of: a time at which the mobile device (10) is at the location, a duration for which the mobile device (10) is at the location, a proximity of at least one further mobile device, data obtained from an application operated by the mobile device (10), image data obtained from the mobile device (10), and sound data obtained from the mobile device (10).

## Patentansprüche

1. Verfahren zum Hinzufügen von Kommentaren auf einer elektronischen Karte (16), wobei das Verfahren Folgendes umfasst:
an einem Server (11), Empfangen (S1) von Positionsinformationen in Bezug auf eine Position des mobilen Geräts (10) von einem mobilen Gerät (10); und
Bestimmen der Position des mobilen Geräts (10) in Bezug auf die elektronische Karte (16);
wobei das Verfahren ferner Folgendes umfasst:
automatisches Erhalten (S4) weiterer Informationen in Bezug auf das mobile Gerät (10), **dadurch gekennzeichnet, dass** die weiteren Informationen mindestens eines der Folgenden einschließen: eine Zeit, zu der sich das mobile Gerät (10) an der Position befindet, eine Dauer, für die sich das mobile Gerät (10) an der Position befindet, eine Nähe von mindestens einem weiteren mobilen Gerät, Daten, die von einer Anwendung erhalten werden, die von dem mobilen Gerät (10) betrieben wird, Bilddaten, die von dem mobilen Gerät erhalten werden, und Tondaten, die von dem mobilen Gerät erhalten werden,
Bestimmen (S5) eines Kommentars (18), der eine vermutete Art und/oder Verwendung der Position eines Benutzers in Bezug auf die elektronische Karte (16) unter Verwendung der erhaltenen weiteren Informationen zusammen mit Regeln anzeigt, die auf dem Server (11) gespeichert sind; und
Verknüpfen (S6) des Kommentars (18) mit der Position (17) des Benutzers auf der elektronischen Karte (16).

2. Verfahren nach Anspruch 1, ferner umfassend:
Bestimmen (S2) aus den Positionsinformationen, dass die elektronische Karte (16) eine Aktualisierung benötigt; und Aktualisieren (S3) der elektronischen Karte (16).

3. Verfahren nach Anspruch 2, wobei die Bestimmung (S2), dass die elektronische Karte (16) eine Aktualisierung benötigt, ein beliebiges des Bestimmens, dass kein Hindernis mehr vorliegt, des Bestimmens, dass ein zuvor nicht zugänglicher Bereich zugänglich ist, und des Bestimmens umfasst, dass sich ein Kartenlayout verändert hat.

4. Verfahren nach den Ansprüchen 2 oder 3, ferner umfassend das Bestimmen, dass die elektronische Karte (16) eine Aktualisierung benötigt, aus den Positionsinformationen, die von einer Vielzahl von mobilen Geräten erhalten werden.

5. Verfahren nach Anspruch 1, wobei die weiteren Informationen die Daten umfassen, die von der Anwendung erhalten werden, die von dem mobilen Gerät (10) betrieben wird, und wobei die Daten, die von der Anwendung erhalten werden, die von dem mobilen Gerät (10) betrieben wird, beliebige von Tagebuchdaten, Kalenderdaten, Besprechungsanfragedaten und Benutzerprofildaten umfassen.

6. Verfahren nach einem der Ansprüche 1 bis 5, ferner umfassend:
an dem Server (11), Generieren einer Route zwischen zwei Positionen auf der elektronischen Karte (16); und
Senden (S7) der Route zu dem mobilen Gerät (10).

7. Verfahren nach einem der Ansprüche 1 bis 6, ferner umfassend:
Senden (S8) der Positionsinformationen, die mit einem Benutzer des mobilen Geräts (10) verknüpft sind, zu einem Präsenzserver (13), bei dem der Benutzer des mobilen Geräts (10) registriert ist.

8. Verfahren nach einem der Ansprüche 1 bis 7, ferner umfassend:
für den Fall, dass die erhaltenen weiteren Informationen mit älteren weiteren Informationen in Bezug auf das mobile Gerät (10) übereinstimmen, Bereitstellen einer geringeren Gewichtung für die älteren weiteren Informationen, wenn der Kommentar (18) in Bezug auf die Position (17) auf der elektronischen Karte (16) bestimmt (S5) wird.

9. Verfahren nach einem der Ansprüche 1 bis 8, ferner umfassend das Erhalten weiterer Informationen von der Vielzahl von mobilen Geräten.

10. Server (11) zur Verwendung in einem Kommunikationsnetz, wobei der Server (11) Folgendes umfasst:
ein computerlesbares Medium in Form eines Speichers (15) zum Speichern einer elektronischen Karte (16);
einen Empfänger (20) zum Empfangen von Positionsinformationen in Bezug auf eine Position des mobilen Geräts (10) von einem mobilen Gerät (10); und
einen Prozessor (14) zum Bestimmen der Position des mobilen Geräts (10) in Bezug auf die elektronische Karte (16);
wobei
der Prozessor (14) angeordnet ist, um automatisch weitere Informationen in Bezug auf das mobile Gerät (10) zu erhalten,
**dadurch gekennzeichnet, dass**
der Prozessor angeordnet ist, um weitere Informationen zu erhalten, die aus mindestens einem der Folgenden ausgewählt sind: einer Zeit, zu der sich das mobile Gerät (10) an der Position befindet, einer Dauer, für die sich das mobile Gerät (10) an der Position befindet, einer Nähe von mindestens einem weiteren mobilen Gerät, Daten, die von einer Anwendung erhalten werden, die von dem mobilen Gerät (10) betrieben wird, Bilddaten, die von dem mobilen Gerät (10) erhalten werden, und Tondaten, die von dem mobilen Gerät (10) erhalten werden;
der Prozessor (14) ferner angeordnet ist, um einen Kommentar (18) zu bestimmen, der eine vermutete Art und/oder Verwendung der Position eines Benutzers in Bezug auf die elektronische Karte (16) unter Verwendung der erhaltenen weiteren Informationen zusammen mit Regeln anzeigt, die auf dem Server (11) gespeichert sind; und
der Prozessor (14) ferner angeordnet ist, um den Kommentar (18) mit der Position (17) des Benutzers auf der elektronischen Karte (16) zu verknüpfen.

11. Server (11) nach Anspruch 10, wobei der Prozessor (14) ferner angeordnet ist, um aus den Positionsinformationen zu bestimmen, dass die elektronische Karte (16) eine Aktualisierung benötigt, und die elektronische Karte (16) anschließend zu aktualisieren.

12. Server (11) nach Anspruch 10 oder 11, wobei der Empfänger (20) angeordnet ist, um Positionsinformationen von einer Vielzahl von mobilen Geräten zu empfangen, und der Prozessor (14) angeordnet ist, um unter Verwendung der Positionsinformationen, die von der Vielzahl von mobilen Geräten erhalten werden, zu bestimmen, dass die elektronische Karte (16) eine Aktualisierung benötigt.

13. System, umfassend einen Server (11) gemäß den Ansprüchen 10 bis 12, und ein mobiles Gerät (10) zur Verwendung in einem Kommunikationsnetz, wobei das mobile Gerät (10) Folgendes umfasst:
einen Prozessor (24) zum Empfangen von Positionsinformationen in Bezug auf das mobile Gerät (10) von einer Positionsanwendung (25) ;
einen ersten Sender (26) zum Senden der Positionsinformationen zu dem Server (11); und
wobei der Prozessor (24) angeordnet ist, um weitere Informationen von einer weiteren Anwendung (27) zu erhalten;
wobei das mobile Gerät (10) ferner Folgendes umfasst:
einen zweiten Sender (28) zum Senden der weiteren Informationen zu dem Server (11), wobei die weiteren Informationen von dem Server (11) verwendet werden können, um den Kommentar (18) in Bezug auf eine elektronische Karte (16) zu bestimmen, **dadurch gekennzeichnet, dass**
die weiteren Informationen mindestens eines der Folgenden einschließen: einer Zeit, zu der sich das mobile Gerät (10) an der Position befindet, einer Dauer, für die sich das mobile Gerät (10) an der Position befindet, einer Nähe von mindestens einem weiteren mobilen Gerät, Daten, die von einer Anwendung erhalten werden, die von dem mobilen Gerät (10) betrieben wird, Bilddaten, die von dem mobilen Gerät (10) erhalten werden, und Tondaten, die von dem mobilen Gerät (10) erhalten werden.

## Revendications

1. Procédé d'annotation d'une carte électronique (16), le procédé comprenant :
au niveau d'un serveur (11), la réception (S1) en provenance d'un dispositif mobile (10) des informations de localisation en rapport avec une localisation du dispositif mobile (10) ; et
la détermination de la localisation du dispositif mobile (10) en rapport avec la carte électronique (16) ;
le procédé comprenant en outre :
l'obtention automatique (S4) d'informations supplémentaires en rapport avec le dispositif mobile (10), **caractérisé en ce que** les informations supplémentaires incluent au moins l'une parmi :
une heure à laquelle le dispositif mobile (10) est au niveau de la localisation, une durée pendant laquelle le dispositif mobile (10) est au niveau de la localisation, une proximité d'au moins un dispositif mobile supplémentaire, des données obtenues à partir d'une application exploitée par le dispositif mobile (10), des données d'image obtenues à partir du dispositif mobile, et des données sonores obtenues à partir du dispositif mobile,
la détermination (S5) d'une annotation (18) indiquant une nature et/ou une utilisation supposées d'une localisation de l'utilisateur en rapport avec la carte électronique (16) à l'aide des informations supplémentaires obtenues conjointement avec des règles stockées au niveau du serveur (11) ; et
l'association (S6) de l'annotation (18) avec la localisation (17) de l'utilisateur sur la carte électronique (16).

2. Procédé selon la revendication 1, comprenant en outre :
la détermination (S2) à partir des informations de localisation que la carte électronique (16) requiert une mise à jour ; et
la mise à jour (S3) de la carte électronique (16).

3. Procédé selon la revendication 2, dans lequel la détermination (S2) que la carte électronique (16) requiert une mise à jour comprend l'une quelconque parmi la détermination qu'un obstacle n'est plus présent, la détermination qu'une région précédemment inaccessible est accessible, et la détermination qu'une présentation de carte a changé.

4. Procédé selon les revendications 2 ou 3, comprenant en outre la détermination que la carte électronique (16) requiert une mise à jour à partir d'informations de localisation obtenues à partir d'une pluralité de dispositifs mobiles.

5. Procédé selon la revendication 1, dans lequel les informations supplémentaires comprennent les données obtenues à partir de l'application exploitée par le dispositif mobile (10), et dans lequel les données obtenues à partir de l'application exploitée par le dispositif mobile (10) comprennent l'une quelconque parmi des données de journal, des données de calendrier, des données de demande de réunion et des données de profil d'utilisateur.

6. Procédé selon l'une quelconque des revendications 1 à 5, comprenant en outre :
au niveau du serveur (11), la génération d'un itinéraire entre deux localisations sur la carte électronique (16) ; et
l'envoi (S7) de l'itinéraire au dispositif mobile (10).

7. Procédé selon l'une quelconque des revendications 1 à 6, comprenant en outre :
l'envoi (S8) des informations de localisation associées à un utilisateur du dispositif mobile (10) à un serveur de présence (13) avec lequel l'utilisateur du dispositif mobile (10) est enregistré.

8. Procédé selon l'une quelconque des revendications 1 à 7, comprenant en outre :
dans l'éventualité où les informations supplémentaires obtenues sont contradictoires avec des informations supplémentaires plus anciennes en rapport avec le dispositif mobile (10), la fourniture d'une pondération plus faible aux informations supplémentaires plus anciennes lors de la détermination (S5) de l'annotation (18) en rapport avec la localisation (17) sur la carte électronique (16).

9. Procédé selon l'une quelconque des revendications 1 à 8, comprenant en outre l'obtention d'informations supplémentaires à partir de la pluralité de dispositifs mobiles.

10. Serveur (11) pour une utilisation dans un réseau de communication, le serveur (11) comprenant :
un support lisible par un ordinateur sous la forme d'une mémoire (15) pour stocker une carte électronique (16) ;
un récepteur (20) pour recevoir en provenance d'un dispositif mobile (10) des informations de localisation en rapport avec une localisation du dispositif mobile (10) ; et
une unité de traitement (14) pour déterminer la localisation du dispositif mobile (10) en rapport avec la carte électronique (16) ;
dans lequel
l'unité de traitement (14) est agencée pour obtenir automatiquement des informations supplémentaires en rapport avec le dispositif mobile (10), **caractérisé en ce que** l'unité de traitement est agencée pour obtenir des informations supplémentaires sélectionnées à partir d'au moins l'une parmi :
une heure à laquelle le dispositif mobile (10) est au niveau de la localisation, une durée pendant laquelle le dispositif mobile (10) est au niveau de la localisation, une proximité d'au moins un dispositif mobile supplémentaire, des données obtenues à partir d'une application exploitée par le dispositif mobile (10), des données d'image obtenues à partir du dispositif mobile (10), et des données sonores obtenues à partir du dispositif mobile (10) ;
l'unité de traitement (14) est en outre agencée pour déterminer une annotation (18) indiquant une nature et/ou une utilisation supposées d'une localisation de l'utilisateur en rapport avec la carte électronique (16) à l'aide des informations supplémentaires obtenues conjointement avec des règles stockées au niveau du serveur (11) ; et
l'unité de traitement (14) est en outre agencée pour associer l'annotation (18) à la localisation (17) de l'utilisateur sur la carte électronique (16).

11. Serveur (11) selon la revendication 10, dans lequel l'unité de traitement (14) est en outre agencée pour déterminer à partir des informations de localisation que la carte électronique (16) requiert une mise à jour, et ensuite mettre à jour la carte électronique (16).

12. Serveur (11) selon la revendication 10 ou 11, dans lequel le récepteur (20) est agencé pour recevoir des informations de localisation en provenance de dispositifs mobiles, et l'unité de traitement (14) est agencée pour déterminer que la carte électronique (16) requiert une mise à jour à l'aide des informations de localisation obtenues à partir de la pluralité de dispositifs mobiles.

13. Système comprenant un serveur (11) selon les revendications 10 à 12, et un dispositif mobile (10) pour une utilisation dans un réseau de communication, le dispositif mobile (10) comprenant :
une unité de traitement (24) pour recevoir, en provenance d'une application de localisation (25), des informations de localisation en rapport avec le dispositif mobile (10) ;
un premier transmetteur (26) pour envoyer les informations de localisation au serveur (11) ; et
l'unité de traitement (24) étant agencée pour obtenir des informations supplémentaires à partir d'une application supplémentaire (27) ;
dans lequel le dispositif mobile (10) comprend en outre :
un second transmetteur (28) pour envoyer les informations supplémentaires au serveur (11), les informations supplémentaires étant utilisables par le serveur (11) pour déterminer l'annotation (18) en rapport avec une carte électronique (16), **caractérisé en ce que** les informations supplémentaires incluent au moins l'une parmi : une heure à laquelle le dispositif mobile (10) est au niveau de la localisation, une durée pendant laquelle le dispositif mobile (10) est au niveau de la localisation, une proximité d'au moins un dispositif mobile supplémentaire, des données obtenues à partir d'une application exploitée par le dispositif mobile (10), des données d'image obtenues à partir du dispositif mobile (10), et des données sonores obtenues à partir du dispositif mobile (10).
